# EUROPÄISCHE PATENTANMELDUNG

(11) **EP 1 887 211 A1**
(43) Veröffentlichungstag der Anmeldung: **13.02.2008**
(21) Anmeldenummer: 07011346.9
(22) Anmeldetag: 09.06.2007
(51) Int. Cl.: F02M 25/07, F02D 13/02

(54) **Kombination einer inneren mit einer äusseren Abgasrückführung**

(30) Priorität: 08.08.2006 DE 102006036990
(71) Anmelder: DEUTZ Aktiengesellschaft, 51149 Köln (DE)
(72) Erfinder: Haas, Eckhard, 51149 Köln (DE); Schubert, Andreas, 51147 Köln (DE); Seils, Michael, 53804 Much (DE)

(57) **Zusammenfassung**

1. Die Erfindung betrifft ein Verfahren zur Abgasrückführung an einer Brennkraftmaschine.
2.1 Ein derartiges Verfahren zur Durchführung einer Abgasrückführung an einer Brennkraftmaschine beinhaltet eine innere Abgasrückführung und eine äußere Abgasrückführung.
2.2 Erfindungsgemäß wird ein Verfahren zur Durchführung einer Abgasrückführung so modifiziert, dass das Betriebsverhalten der Brennkraftmaschine mit geringem Aufwand verbessert ist. Dazu erfolgt die Entnahme des Abgases der äußeren Abgasrückführung an einer Stelle des Abgassystems, welches die höchsten Druckpulsationen aufweist.

## Beschreibung

Die Erfindung betrifft ein Verfahren zur Durchführung einer Abgasrückführung an einer Brennkraftmaschine, bestehend aus einer inneren Abgasrückführung (iAGR), bei der über ein Öffnen von Gaswechselventilen während einer Ansaugphase Abgas in von Zylindern, Kolben und Zylinderköpfen gebildeten Brennräumen angesaugt wird, und einer äußeren Abgasrückführung (äAGR), bei der ein Teil des Abgases aus dem die Abgasleitung umfassenden Abgassystem über eine Abgasrückführleitung der Frischluft des eine Ladeluftleitung umfassenden Frischluftsystems zugemischt wird.

Allgemein wird eine Abgasrückführung (AGR) unter anderem zur Minderung von Stickstoffoxiden (NOx) bei der Verbrennung von Kraftstoff insbesondere bei selbstzündenden Brennkraftmaschinen eingesetzt, aber auch in Ottomotoren, Gasturbinen oder Heizkesseln. Diese Reduktion ist nötig, um speziell bei Brennkraftmaschinen für Fahrzeuge oder (Bau)- Maschinen vorgeschriebene Emissionsgrenzwerte zu erreichen.

### Funktionsweise:

Bei einer äußeren Abgasrückführung (äAGR) wird ein Teil des Abgases durch eine Abgasrückführleitung (AGR-Leitung) gesteuert über eine Abgasrückführklappe der Frischluft zugemischt. Bei einer inneren Abgasrückführung (innere AGR) wird Abgas durch ein zusätzliches oder längeres Öffnen von zumindest einem Auslassventil in zumindest einen Brennraum zurückgeschoben. Alternativ oder zusätzlich wird eine innere Abgasrückführung (innere AGR) realisiert, indem ein Einlassventil während der Öffnungsperiode eines Auslassventils zusätzlich geöffnet wird. Dieses Öffnen wird in der Regel über Zusatznocken auf der Nockenwelle erreicht. Unter anderem wird zumindest bei Ottomotoren durch die höhere Wärmekapazität des Abgases im Vergleich zu Luft die Verbrennungstemperatur abgesenkt und es entstehen weniger Stickoxide.

Aus der DE 42 44 774 C2 ist eine Abgasrückführung für Brennkraftmaschinen mit Funkenzündung (Ottomotoren) bekannt, die aus einer inneren Abgasrückführung (iAGR), bei der über ein Öffnen der Auslassventile während der Ansaugphase Abgas aus der Abgasleitung in die Zylinder angesaugt wird, und einer äußeren Abgasrückführung (äußere AGR), bei der ein Teil des Abgases aus dem Abgassystem über eine AGR-Leitung wieder der Frischluft in der Ladeluftleitung zugemischt wird, besteht.

Der Erfindung liegt die Aufgabe zugrunde, ein Verfahren zur Durchführung einer Abgasrückführung so zu modifizieren, dass das Betriebsverhalten der Brennkraftmaschine mit geringem Aufwand verbessert ist.

Erfindungsgemäß wird diese Aufgabe dadurch gelöst, dass neben der Durchführung einer äußeren Abgasrückführung (äußere AGR) die Entnahme des Abgases für die äußere Abgasrückführung (äAGR) an einer Stelle des Abgassystems erfolgt, das die höchsten Druckpulsationen aufweist. Dadurch wird die Abgasrückführrate mit einfachen Mitteln erhöht und das Betriebsverhalten der Brennkraftmaschine verbessert.

Dabei liegt der Erfindung zunächst die Erkenntnis zugrunde, dass speziell bei aufgeladenen selbstzündenden Brennkraftmaschinen zur Erreichung der sogenannten Abgasstufe TIER 3A in vielen Fällen eine innere Abgasrückführung (iAGR) verwendet wird, bei der mittels Zusatznocken neben oder auf zumindest einem Auslassnocken Abgas in einen Brennraum und gegebenenfalls über die geöffneten Einlassventile des Brennraums weiter in die Ladeluftleitung zurückleitet wird. Bei hoher Leistungsausnutzung der Brennkraftmaschinen oder bei schärferen Ansprüchen an den Kraftstoffverbrauch ist die innere Abgasrückführung (iAGR) in einigen Fällen unbefriedigend, da die Rückführraten des Abgases relativ niedrig sind. Dies gilt insbesondere bei Brennkraftmaschinen in 4-Zylinder-Reihen-Bauart und 8-Zylinder-V-Bauart. Bei solchen niedrigen Abgasrückführraten müssen die NOX-Emissionen weitgehend durch die Spätstellung des Einspritzbeginns auf niedrige Werte gebracht werden. Dies führt aber zu relativ hohen Kraftstoffverbräuchen und hohen thermischen Belastungen der Brennkraftmaschinen. Der Vorteil der innere Abgasrückführung (iAGR) ist der geringe Kostenaufwand, die in der Brennkraftmaschine integrierte Bauweise, die keine Veränderung der Brennkraftmaschinenkontur erfordert, und die nur geringe Erhöhung der Kühlwasserwärme.

Bei Brennkraftmaschinen mit Waste-Gate Turboladern und zweiflutiger Turbine erfolgt in erfindungsgemäßer Ausgestaltung die Entnahme des Abgases auf dem nicht mit dem Waste-Gate verbundenen hochdruckseitigen Abgasstrang. Dadurch wird eventuell die Anwendung eines üblichen Rückschlagventils vermeidbar, jedoch ist im Allgemeinen ein Rückschlagventil erforderlich. Die somit erzielbare zusätzliche Abgasrückführrate liegt zwischen 2 und 8 % im Vergleich zu einer nur inneren Abgasrückführung.

Bevorzugt ist in der Abgasrückführleitung ein Abgasrückführkühler angeordnet. Die über einen solchen Abgasrückführkühler abzuführende Wärmemenge ist deutlich niedriger als bei einer üblichen gekühlten äußeren Abgasrückführung ohne die innere Abgasrückführung. Dadurch hat der Abgasrückführkühler nur etwa 25 % bis 50 % der üblichen Abmessungen. In günstigen Fällen, zum Beispiel wenn es sich um eine luftgekühlte Brennkraftmaschine handelt oder die Abgasrückführleitung im Bereich des Kühlerventilators verlegt ist oder eine erhebliche Länge aufweist, ist kein eigener Abgasrückführkühler notwendig. Hier reicht die Kühlung der Abgasrückführleitung durch Konvektion aus.

In der Abgasrückführleitung vor der Einleitungsstelle des Abgases in das hochdruckseitige Ladeluftsystem der Brennkraftmaschine - hinter dem Verdichter- ist bevorzugt eine gesteuerte Abgasrückführklappe angeordnet. Mit dieser Abgasrückführklappe kann die rückgeführte Abgasmenge in Form einer Schwarz-Weiß-Regelung oder aber auch stufenlosen Regelung eingestellt werden.

Dies ist insbesondere zweckmäßig, wenn es sich um Brennkraftmaschinenanwendungen handelt, bei denen an den Hochlauf der Brennkraftmaschine aus niedrigen Drehzahlen höhere Anforderungen gestellt werden, zum Beispiel hinsichtlich der Hochlaufzeit oder einem Rauchstoß.

Dann wird bevorzugt durch die elektronische Steuerung der Brennkraftmaschine die Abgasrückführklappe im Drehzahlbereich unterhalb einer mittleren Drehzahl geschlossen. Grundsätzlich kann die elektronische Steuerung der Brennkraftmaschine für eine stufenlose Regelung herangezogen werden. Denkbar ist aber auch eine mechanische oder mechanisch-elektrische Regelung, bei der beispielsweise die Position der Regelstange mechanisch oder induktiv erfasst wird und mechanisch oder elektrisch die Abgasrückführklappe verstellt wird.

In erfindungsgemäßer Ausgestaltung mündet die Abgasrückführleitung in die Ladeluftleitung vor der Brennkraftmaschine ein. Günstiger ist es, die Abgase aus der Abgasrückführleitung jeweils durch ein dünnes Rohr in die Einlasskanäle der einzelnen Zylinderköpfe, die im Übrigen als Einzelzylinderköpfe oder als Blockzylinderkopf ausgebildet sein können, einzuleiten. Dies hat den Vorteil, dass durch die hohen Strömungsgeschwindigkeiten an der Wand jedes Einlasskanals ein Saugeffekt auftritt, der die Abgasrückführrate noch weiter erhöht.

Nachfolgend wird die Erfindung anhand einer Zeichnung näher erläutert.

Mit dem Bezugszeichen 1 ist eine selbstzündende, aufgeladene Brennkraftmaschine bezeichnet.

An der Nockenwelle 9 sind Zusatznocken zur Durchführung der inneren Abgasrückführung (iAGR) angeordnet. Mit dem Bezugszeichen 10 ist schematisch der Abgasstrom von der Auslassseite zur Einlassseite innerhalb der Brennkraftmaschine bezeichnet. Dabei wird das Abgas durch ein zusätzliches oder längeres Öffnen von zumindest einem Auslassventil und/oder einem Einlassventil in zumindest einen Brennraum zurückgeschoben und gegebenenfalls durch ein offenes Einlassventil weiter in das Frischluftsystemgeleitet.

Die Abgase des Motors werden über eine Abgasleitung 4 zur Turbine 2 des Turboladers geleitet und treiben diese an. Hierdurch wird der Verdichter 3 angetrieben, der die angesaugte Luft als verdichtete Ladeluft in die Ladeluftleitung 5 zu den Zylindern fördert.

Für die äußere Abgasrückführung ist die Abgasleitung 4 mit der Ladeluftleitung 5 über eine Abgasrückführleitung 6 verbunden. In der Abgasrückführleitung 6 ist in der dargestellten Ausführungsform ein Kühler 7 angeordnet.

Mit dem Bezugszeichen 8 ist der Ort der Einleitung der Abgasrückführleitung 6 in die Ladeluftleitung 5 bezeichnet.

### Bezugszeichen

- 1: Brennkraftmaschine
- 2: Turbine
- 3: Verdichter
- 4: Abgasleitung
- 5: Ladeluftleitung
- 6: Abgasrückführleitung
- 7: Kühler
- 8: Einleitungsort
- 9: Nockenwelle
- 10: Abgasstrom

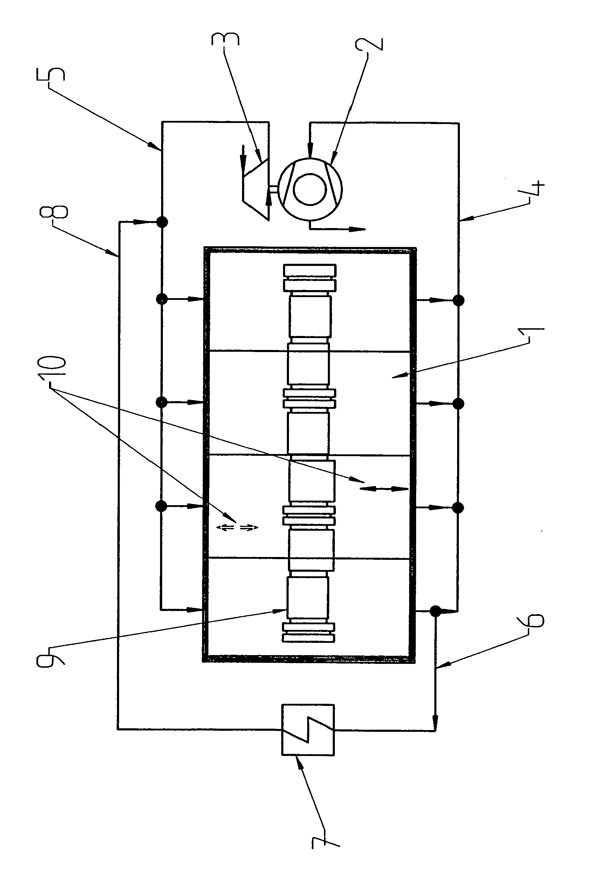

## Patentansprüche

1. Verfahren zur Durchführung einer Abgasrückführung an einer Brennkraftmaschine, bestehend aus einer inneren Abgasrückführung (iAGR), bei der über ein Öffnen von Gaswechselventilen während einer Ansaugphase Abgas in von Zylindern, Kolben und Zylinderköpfen gebildeten Brennräumen angesaugt wird, und einer äußeren Abgasrückführung (äAGR), bei der ein Teil des Abgases aus dem die Abgasleitung (4) umfassenden Abgassystem über eine Abgasrückführleitung (6) der Frischluft des eine Ladeluftleitung (5) umfassenden Frischluftsystems zugemischt wird,
***dadurch gekennzeichnet, dass*** die Entnahme des Abgases für die äußere Abgasrückführung (äAGR) an einer Stelle des Abgassystems erfolgt, das die höchsten Druckpulsationen aufweist.

2. Verfahren zur Durchführung einer Abgasrückführung nach Anspruch 1,
***dadurch gekennzeichnet, dass*** bei einer Brennkraftmaschine mit Waste-Gate Turboladern und zweiflutiger Turbine die Entnahme des Abgases auf dem nicht mit dem Waste-Gate verbundenen hochdruckseitigen Abgasstrang erfolgt.

3. Verfahren zur Durchführung einer Abgasrückführung nach Anspruch 1 oder 2,
***dadurch gekennzeichnet, dass*** das Abgas durch ein in der Abgasrückführleitung (6) angeordnetes Rückschlagventil geleitet wird.

4. Verfahren zur Durchführung einer Abgasrückführung nach einem der Ansprüche 1 bis 3,
***dadurch gekennzeichnet, dass*** das Abgas durch einen in der Abgasrückführleitung (6) angeordneten Kühler (7) geleitet wird.

5. Verfahren zur Durchführung einer Abgasrückführung nach einem der Ansprüche 1 bis 4,
***dadurch gekennzeichnet, dass*** die Abgasrückführleitung (6) ausschließlich durch Konvektion gekühlt ist.

6. Verfahren zur Durchführung einer Abgasrückführung nach einem der Ansprüche 1 bis 5,
***dadurch gekennzeichnet, dass*** die Rückführung des Abgases durch eine in der Abgasrückführleitung (6) vor der Einleitung des Abgases in das hochdruckseitige Ladeluftsystem der Brennkraftmaschine - hinter dem Verdichter (3) - gesteuerte Abgasrückführklappe eingeschaltet und ausgeschaltet wird.

7. Verfahren zur Durchführung einer Abgasrückführung nach Anspruch 6,
***dadurch gekennzeichnet, dass*** eine elektronische Steuerung die Abgasrückführklappe im Drehzahlbereich unterhalb einer mittleren Drehzahl schließt.

8. Verfahren zur Durchführung einer Abgasrückführung nach einem der Ansprüche 1 bis 7,
***dadurch gekennzeichnet, dass*** die Abgasrückführleitung (6) in die Ladeluftleitung (5) vor dem Motor (1) einmündet.

9. Verfahren zur Durchführung einer Abgasrückführung nach einem der Ansprüche 1 bis 7,
***dadurch gekennzeichnet, dass*** die Abgase aus der Abgasrückführleitung (6) jeweils durch ein dünnes Rohr in die Einlasskanäle der einzelnen Zylinderköpfe geführt sind.
